(19) Europäisches Patentamt
European Patent Office
Office européen des brevets

(11) EP 4 179 022 B1

(12) EUROPEAN PATENT SPECIFICATION

(45) Date of publication and mention of the grant of the patent:
**23.10.2024 Bulletin 2024/43**

(21) Application number: **21749007.7**

(22) Date of filing: **01.07.2021**

(51) International Patent Classification (IPC):
***C08L 23/08*** *(2006.01)* ***C08K 3/22*** *(2006.01)*
***C08L 25/18*** *(2006.01)* ***C08L 23/04*** *(2006.01)*

(52) Cooperative Patent Classification (CPC):
(C-Sets available)
**C08L 23/0892;** C08L 2201/02; C08L 2203/20;
C08L 2203/202 (Cont.)

(86) International application number:
**PCT/US2021/040136**

(87) International publication number:
**WO 2022/015520 (20.01.2022 Gazette 2022/03)**

# (54) FLAME-RETARDANT POLYMERIC COMPOSITIONS

FLAMMWIDRIGE POLYMERZUSAMMENSETZUNGEN

COMPOSITIONS POLYMÈRES IGNIFUGES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.07.2020 US 202063051014 P**

(43) Date of publication of application:
**17.05.2023 Bulletin 2023/20**

(60) Divisional application:
**24175296.3 / 4 389 816**

(73) Proprietor: **Dow Global Technologies LLC**
**Midland, MI 48674 (US)**

(72) Inventors:
- **LIM, Chongsoo**
**Collegeville, Pennsylvania 19426 (US)**
- **SHAH, Andrew B.**
**Collegeville, Pennsylvania 19426 (US)**
- **CHAUDHARY, Bharat I.**
**Collegeville, Pennsylvania 19426 (US)**

(74) Representative: **Boult Wade Tennant LLP**
**Salisbury Square House**
**8 Salisbury Square**
**London EC4Y 8AP (GB)**

(56) References cited:
**WO-A1-2018/049117 WO-A1-2019/032335**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 23/0892, C08K 3/2279, C08L 23/04, C08L 25/18**

**Description**

## BACKGROUND

### *Field of the disclosure*

The present disclosure relates to polymeric compositions, and more specifically to flame-retardant polymeric compositions.

### *Introduction*

Polymeric compositions comprising halogenated flame-retardants are known. Examples of halogenated flame retardants include brominated flame retardants. WO2019/032335 A1 relates to silane-functionalized compositions comprising a polymeric brominated flame retardant. Polymeric compositions only relying on halogenated flame retardants to provide flame retardancy typically require high loadings of flame retardants, and often cannot meet the most stringent burn performance requirements. High loadings of flame retardants adversely affect the processability and mechanical performance, such as tensile elongation and impact strength, of the polymeric compositions.

During exposure to heat or flame, halogenated flame retardants form a halogenated vapor phase. The halogenated vapor phase is believed to retard flame progression through a free radical flame poisoning mechanism. In the free radical poisoning mechanism, active free radicals, that would otherwise go on to promote further exothermic reactions, are bonded with and neutralized by the halogen in the halogenated vapor.

Antimony trioxide is used in conjunction with halogenated flame retardants. Antimony trioxide is believed to provide a synergistic effect to the halogenated flame retardants by evolution of volatile but dense antimony halides vapors through successive transformation of halogenated antimony oxide complexes generated from reaction between halogenated flame retardant and antimony oxide as the temperature increases. This bonding of the antimony and the halogen creates various vapor phase compounds having greater stability than the halogenated vapor phase without antimony. The greater stability and higher density of the antimony halides increase the residence time of the halogenated vapor phase in proximity to the combustion zone where free radical chain reactions happen so that a greater number of free radicals are poisoned and flame progression is resisted.

One type of a halogenated flame retardant used is a polymeric brominated flame retardant, however it has been discovered that such flame retardants face challenges when used with polyolefins (including ethylene polymers) to create flame retardant technology for wire and cable applications. Most of the polymeric brominated flame retardants are based on polystyrene or polyphenyleneoxide structures and are thus not compatible with polyolefins due to differences in surface chemistry and polarity of the components. Further, polymeric brominated flame retardants often have low thermal stability which results in premature thermal decomposition while melt blending with polyolefins to make formulated compounds (to use as a flame retardant masterbatches) and/or during melt blending/extrusion with polyolefins to make insulated wires, thus leading to poor quality wires with associated loss of flame retardancy properties. Additionally, some polymeric brominated flame retardants exhibit glass transition temperatures or softening points that are rather higher than typical melting points of polyolefins, which can be problematic from the point of view of melt mixing.

In view of the discovered incompatibilities of polymeric brominated flame retardants and polyolefins as well as the potential for premature thermal decomposition and loss of flame retardancy during melt blending with polyolefins, it would be surprising to discover a polymeric composition comprising a polymeric brominated flame retardant, a polyolefin and antimony trioxide that enables the formation of coated conductors (i.e., insulated wires) that pass a VW-1 Burn Test and a Horizontal Burn Test, but only with specific types of polymeric brominated flame retardants and only with specific proportions of flame retardant synergist (antimony trioxide).

## SUMMARY OF THE DISCLOSURE

In the first aspect there is provided a polymeric composition as defined in claim 1 of the claims appended hereto.

The present invention provides a polymeric composition comprising a polymeric brominated flame retardant, a polyolefin (including ethylene polymer) and antimony trioxide that enables the formation of coated conductors that pass a VW-1 Burn Test and a Horizontal Burn Test.

The inventors of the present application have surprisingly discovered that polymeric brominated flame retardants, wherein the brominated flame retardant is aromatically brominated, having a molecular weight of 2000 g/mol to 30,000 g/mol are sufficiently low enough in viscosity to be homogenously blended into ethylene polymer carrier resins despite the differences in surface chemistry and polarity of the components, with the composition additionally comprising antimony trioxide. Further, when such polymeric brominated flame retardants have a Temperature of 5% Mass Loss from 300°C to 700°C, the polymeric brominated flame retardant is thermally stable enough to be melt blended into the

ethylene polymer (along with antimony trioxide) without losing its flame retardancy properties. When such a polymeric brominated flame retardant is combined with a silane functionalized polyolefin (including silane functionalized ethylene polymer) and sufficient quantities of antimony trioxide to produce a polymeric composition having an antimony (Sb) to bromine (Br) molar ratio (Sb:Br molar ratio) of 0.35 to 0.98, the polymeric composition enables the formation of coated conductors that pass the VW-1 Burn Test and the Horizontal Burn Test.

The polymeric compositions of the present invention are particularly useful as jackets or insulations for wires and cables.

According to a first feature of the present disclosure, a polymeric composition includes a silane functionalized polyolefin, wherein the polymeric composition comprises 42 wt% or greater, while at the same time, 75 wt% or less, of the silane functionalized polyolefin based on a total weight of the polymeric composition; a brominated flame retardant having a Temperature of 5% Mass Loss from 300°C to 700°C as measured according to Thermogravimetric Analysis, wherein the brominated flame retardant is polymeric and has a weight average molecular weight of from 2,000 g/mol to 30,000 g/mol as measured using Gel Permeation Chromatography, wherein the brominated flame retardant is aromatically brominated; and antimony trioxide, wherein the polymeric composition has an antimony (Sb) to bromine (Br) molar ratio (Sb:Br molar ratio) of 0.35 to 0.98.

According to a second feature of the present disclosure, the polymeric composition further comprises 0.001 wt% to 20.0 wt% of a silanol condensation catalyst based on a total weight of the polymeric composition.

According to a third feature of the present disclosure, the polymeric composition comprises from 5 wt% to 50 wt% antimony trioxide based on the total weight of the polymeric composition.

According to a fourth feature of the present disclosure, the polymeric composition further comprises 0 wt% to 10 wt% zinc oxide, wherein the polymeric composition has a zinc (Zn) to Br molar ratio (Zn:Br molar ratio) from 0 to 1.85.

According to a fifth feature of the present disclosure, the polymeric composition further comprises 0.5 wt% to 20 wt% of a second polyolefin based on a total weight of the polymeric composition, wherein the second polyolefin has a crystallinity at 23°C of from 0 wt% to 80 wt% as measured according to Crystallinity Testing.

According to a sixth feature of the present disclosure, the polymeric composition comprises from 5 wt% to 50 wt% brominated flame retardant based on the total weight of the polymeric composition.

According to an seventh feature of the present disclosure the brominated flame retardant comprises aromatically brominated polystyrene having a Temperature of 5% Mass Loss from 300°C to 400°C as measured according to Thermogravimetric Analysis and a molecular weight of 3,000 g/mol to 16,000 g/mol as measured using Gel Permeation Chromatography

According to an eighthfeature of the present disclosure, a coated conductor comprises a conductor; and the polymeric composition at least partially around the conductor.

According to a ninth feature of the present disclosure, the coated conductor passes one or more of a VW-1 Burn Test and a Horizontal Burn Test.

## DETAILED DESCRIPTION

As used herein, the term "and/or," when used in a list of two or more items, means that any one of the listed items can be employed by itself, or any combination of two or more of the listed items can be employed. For example, if a composition is described as containing components A, B, and/or C, the composition can contain A alone; B alone; C alone; A and B in combination; A and C in combination; B and C in combination; or A, B, and C in combination.

All ranges include endpoints unless otherwise stated.

Test methods refer to the most recent test method as of the priority date of this document unless a date is indicated with the test method number as a hyphenated two-digit number. References to test methods contain both a reference to the testing society and the test method number. Test method organizations are referenced by one of the following abbreviations: ASTM refers to ASTM International (formerly known as American Society for Testing and Materials); EN refers to European Norm; DIN refers to Deutsches Institut für Normung; and ISO refers to International Organization for Standards.

As used herein, the term weight percent ("wt%") designates the percentage by weight a component is of a total weight of the polymeric composition unless otherwise indicated.

As used herein, a "CAS number" is the chemical services registry number assigned by the Chemical Abstracts Service.

### *Polymeric composition*

The present disclosure is directed to a polymeric composition. The polymer composition includes a silane functionalized polyolefin, a brominated flame retardant and antimony trioxide. The polymeric composition has an antimony (Sb) to bromine (Br) molar ratio (Sb:Br molar ratio) of 0.35 to 0.98.

*Silane functionalized polyolefin*

The polymeric composition comprises a silane functionalized polyolefin. A "silane-functionalized polyolefin" is a polymer that contains silane and equal to or greater than 50 wt%, or a majority amount, of polymerized $\alpha$-olefin, based on the total weight of the silane-functionalized polyolefin. "Polymer" means a macromolecular compound prepared by reacting (i.e., polymerizing) monomers of the same or different type. As noted above, the polymeric composition comprises the silane-functionalized polyolefin. The silane-functionalized polyolefin crosslinks typically in the presence of moisture with suitable catalyst at elevated temperature and in doing so increases the resistance to flow of the polymeric composition.

The silane-functionalized polyolefin may include an $\alpha$-olefin and silane copolymer, a silane-grafted polyolefin, and/or combinations thereof. An "$\alpha$-olefin and silane copolymer" ($\alpha$-olefin/silane copolymer) is formed from the copolymerization of an $\alpha$-olefin (such as ethylene) and a hydrolyzable silane monomer (such as a vinyl silane monomer) such that the hydrolyzable silane monomer is incorporated into the backbone of the polymer chain prior to the polymer's incorporation into the polymeric composition. A "silane-grafted polyolefin" or "Si-g-PO" may be formed by the Sioplas process in which a hydrolyzable silane monomer is grafted onto the backbone of a base polyolefin by a process such as extrusion, prior to the polymer's incorporation into the polymeric composition.

In examples where the silane-functionalized polyolefin is an $\alpha$-olefin and silane copolymer, the silane-functionalized polyolefin is prepared by the copolymerization of at least one $\alpha$-olefin and a hydrolyzable silane monomer. In examples where the silane-functionalized polyolefin is a silane grafted polyolefin, the silane-functionalized polyolefin is prepared by grafting one or more hydrolyzable silane monomers on to the polymerized $\alpha$-olefin backbone of a polymer.

The silane-functionalized polyolefin may comprise 50 wt% or greater, 60 wt% or greater, 70 wt% or greater, 80 wt% or greater, 85 wt% or greater, 90 wt% or greater, or 91 wt% or greater, or 92 wt% or greater, or 93 wt% or greater, or 94 wt% or greater, or 95 wt% or greater, or 96 wt% or greater, or 97 wt% or greater, or 97.5 wt% or greater, or 98 wt% or greater, or 99 wt% or greater, while at the same time, 99.5 wt% or less, or 99 wt% or less, or 98 wt% or less, or 97 wt% or less, or 96 wt% or less, or 95 wt% or less, or 94 wt% or less, or 93 wt% or less, or 92 wt% or less, or 91 wt% or less, or 90 wt% or less, or 85 wt% or less, or 80 wt% or less, or 70 wt% or less, or 60 wt% or less of $\alpha$-olefin as measured using Nuclear Magnetic Resonance (NMR) or Fourier-Transform Infrared (FTIR) Spectroscopy. The $\alpha$-olefin may include $C_2$, or $C_3$ to $C_4$, or $C_6$, or $C_8$, or $C_{10}$, or $C_{12}$, or $C_{16}$, or $C_{18}$, or $C_{20}$ $\alpha$-olefins, such as ethylene, propylene, 1-butene, 1-hexene, 4-methyl-1-pentene, and 1-octene. Other units of the silane-functionalized polyolefin may be derived from one or more polymerizable monomers including, but not limited to, unsaturated esters. The unsaturated esters may be alkyl acrylates, alkyl methacrylates, or vinyl carboxylates. The alkyl groups can have from 1 to 8 carbon atoms, or from 1 to 4 carbon atoms. The carboxylate groups can have from 2 to 8 carbon atoms, or from 2 to 5 carbon atoms. Examples of acrylates and methacrylates include, but are not limited to, ethyl acrylate, methyl acrylate, methyl methacrylate, t-butyl acrylate, n-butyl acrylate, n-butyl methacrylate, and 2-ethylhexyl acrylate. Examples of vinyl carboxylates include, but are not limited to, vinyl acetate, vinyl propionate, and vinyl butanoate.

The silane-functionalized polyolefin has a density of 0.860 grams per cubic centimeter (g/cc) or greater, or 0.870 g/cc or greater, or 0.880 g/cc or greater, or 0.890 g/cc or greater, or 0.900 g/cc or greater, or 0.910 g/cc or greater, or 0.915 g/cc or greater, or 0.920 g/cc or greater, or 0.921 g/cc or greater, or 0.922 g/cc or greater, or 0.925 g/cc to 0.930 g/cc or greater, or 0.935 g/cc or greater, while at the same time, 0.970 g/cc or less, or 0.960 g/cc or less, or 0.950 g/cc or less, or 0.940 g/cc or less, or 0.935 g/cc or less, or 0.930 g/cc or less, or 0.925 g/cc or less, or 0.920 g/cc or less, or 0.915 g/cc or less as measured by ASTM D792.

A "hydrolyzable silane monomer" is a silane-containing monomer that will effectively copolymerize with an $\alpha$-olefin (e.g., ethylene) to form an $\alpha$-olefin/silane copolymer (such as an ethylene/silane copolymer), or graft to an $\alpha$-olefin polymer (i.e., a polyolefin) to form a Si-g-polyolefin, thus enabling subsequent crosslinking of the silane-functionalized polyolefin. A representative, but not limiting, example of a hydrolyzable silane monomer has structure (I):

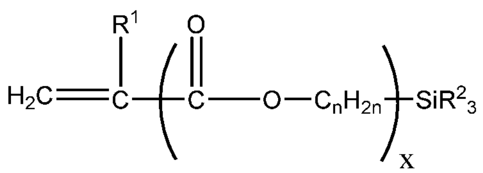

Structure (I)

in which $R^1$ is a hydrogen atom or methyl group; x is 0 or 1; n is an integer from 1 to 4, or 6, or 8, or 10, or 12; and each $R^2$ independently is a hydrolyzable organic group such as an alkoxy group having from 1 to 12 carbon atoms (e.g., methoxy, ethoxy, butoxy), an aryloxy group (e.g., phenoxy), an araloxy group (e.g., benzyloxy), an aliphatic acyloxy group having from 1 to 12 carbon atoms (e.g., formyloxy, acetyloxy, propanoyloxy), an amino or substituted amino group (e.g., alkylamino, arylamino), or a lower-alkyl group having 1 to 6 carbon atoms, with the proviso that not more than one

of the three $R^2$ groups is an alkyl. The hydrolyzable silane monomer may be copolymerized with an $\alpha$-olefin (such as ethylene) in a reactor, such as a high-pressure process, to form an $\alpha$-olefin/silane copolymer. In examples where the $\alpha$-olefin is ethylene, such a copolymer is referred to herein as an ethylene/silane copolymer. The hydrolyzable silane monomer may also be grafted to a polyolefin (such as a polyethylene) by the use of an organic peroxide, such as 2,5-bis(tert-butylperoxy)-2,5-dimethylhexane, to form a Si-g-PO or an in-situ Si-g-PO. The in-situ Si-g-PO is formed by a process such as the MONOSIL process, in which a hydrolyzable silane monomer is grafted onto the backbone of a polyolefin during the extrusion of the present composition to form a coated conductor, as described, for example, in USP 4,574,133.

The hydrolyzable silane monomer may include silane monomers that comprise an ethylenically unsaturated hydrocarbyl group, such as a vinyl, allyl, isopropenyl, butenyl, cyclohexenyl or gamma (meth)acryloxy allyl group, and a hydrolyzable group, such as, for example, a hydrocarbyloxy, hydrocarbonyloxy, or hydrocarbylamino group. Hydrolyzable groups may include methoxy, ethoxy, formyloxy, acetoxy, proprionyloxy, and alkyl or arylamino groups. In a specific example, the hydrolyzable silane monomer is an unsaturated alkoxy silane, which can be grafted onto the polyolefin or copolymerized in-reactor with an $\alpha$-olefin (such as ethylene). Examples of hydrolyzable silane monomers include vinyltrimethoxysilane (VTMS), vinyltriethoxysilane (VTES), vinyltriacetoxysilane, and gamma-(meth)acryloxy propyl trimethoxy silane. In context to Structure (I), for VTMS: x = 0; $R^1$ = hydrogen; and $R^2$ = methoxy; for VTES: x = 0; $R^1$ = hydrogen; and $R^2$ = ethoxy; and for vinyltriacetoxysilane: x = 0; $R^1$ = H; and $R^2$ = acetoxy.

Examples of suitable ethylene/silane copolymers are commercially available as SI-LINK™ DFDA-5451 NT and SI-LINK™ AC DFDB-5451 NT, each available from The Dow Chemical Company, Midland, MI. Examples of suitable Si-g-PO are commercially available as PEXIDAN™ A-3001 from SACO AEI Polymers, Sheboygan, WI and SYNCURE™ S1054A from PolyOne, Avon Lake, OH.

The polymeric composition may comprise 42 wt% or greater, or 44 wt% or greater, or 46 wt% or greater, or 48 wt% or greater, or 50 wt% or greater, or 52 wt% or greater, or 54 wt% or greater, or 56 wt% or greater, or 58 wt% or greater, or 60 wt% or greater, or 65 wt% or greater, or 70 wt% or greater, while at the same time, 75 wt% or less, or 70 wt% or less, or 65 wt% or less, or 60 wt% or less, or 58 wt% or less, or 56 wt% or less, or 54 wt% or less, or 52 wt% or less, or 40 wt% or less, or 48 wt% or less, or 46 wt% or less, or 44 wt% or less, or 42 wt% or less, or 40 wt% or less, or 38 wt% or less, or 36 wt% or less, or 34 wt% or less, or 32 wt% or less, or 30 wt% or less, or 28 wt% or less, or 26 wt% or less of silane-functionalized polyolefin based on a total weight of the polymeric composition.

The silane-functionalized polyolefin has a melt index as measured according to ASTM D1238 under the conditions of 190°C/2.16 kilogram (kg) weight and is reported in grams eluted per 10 minutes (g/10 min). The melt index of the silane functionalized polyolefin may be 0.5 g/10 min or greater, or 1.0 g/10 min or greater, or 1.5 g/10 min or greater, or 2.0 g/10 min or greater, or 2.5 g/10 min or greater, or 3.0 g/10 min or greater, or 3.5 g/10 min or greater, or 4.0 g/10 min or greater, or 4.5 g/10 min or greater, while at the same time, 30.0 g/10 min or less, or 25.0 g/10 min or less, or 20.0 g/10 min or less, or 15.0 g/10 min or less, or 10.0 g/10 min or less, or 5.0 g/10 min or less, or 4.5 g/10 min or less, or 4.0 g/10 min or less, or 3.5 g/10 min or less, or 3.0 g/10 min or less, or 2.5 g/10 min or less, or 2.0 g/10 min or less, or 1.5 g/10 min or less, or 1.0 g/10 min or less.

*Brominated Flame Retardant*

The polymeric composition comprises a brominated flame retardant. The brominated flame retardant may have a Temperature of 5% Mass Loss from 300°C to 700°C as measured according to Thermogravimetric Analysis as explained below. The Temperature of 5% Mass Loss may be 300°C or greater, or 310°C or greater, or 320°C or greater or 330°C or greater, or 340°C or greater, or 350°C or greater, or 360°C or greater, or 370°C or greater, or 380°C or greater, or 390°C or greater, or 400°C or greater, or 410°C or greater, or 420°C or greater, or 430°C or greater, or 440°C or greater, or 450°C or greater, or 460°C or greater, or 470°C or greater, or 480°C or greater, or 490°C or greater, or 500°C or greater, or 510°C or greater, or 520°C or greater, or 530°C or greater, or 540°C or greater, or 550°C or greater, or 560°C or greater, or 570°C or greater, or 580°C or greater, or 590°C or greater, or 600°C or greater, or 610°C or greater, or 620°C or greater, or 630°C or greater, or 640°C or greater, or 650°C or greater, or 660°C or greater, or 670°C or greater, or 680°C or greater, or 690°C or greater, while at the same time, 700°C or less, or 690°C or less, or 680°C or less, or 670°C or less, or 660°C or less, or 650°C or less, or 640°C or less, or 630°C or less, or 620°C or less, or 610°C or less, 600°C or less, or 590°C or less, or 580°C or less, or 570°C or less, or 560°C or less, or 550°C or less, or 540°C or less, or 530°C or less, or 520°C or less, or 510°C or less, 500°C or less, or 490°C or less, or 480°C or less, or 470°C or less, or 460°C or less, or 450°C or less, or 440°C or less, or 430°C or less, or 420°C or less, or 410°C or less, or 400°C or less, or 390°C or less, or 380°C or less, or 370°C or less, or 360°C or less, or 350°C or less, or 340°C or less, or 330°C or less, or 320°C or less, or 310°C or less as measured according to Thermogravimetric Analysis. The Temperature of 5% Mass Loss is correlated with dehydrobromination of the brominated flame retardant. Premature dehydrobromination negatively affects the flame retardancy, as does too late dehydrobromination, and as such having a Temperature of 5% Mass Loss from 300°C to 700°C is advantageous in increasing flame retardancy.

The brominated flame retardant may have a Retained Mass at 650°C of 0 wt% to 50 wt% as measured according to Thermogravimetric Analysis as explained below. The brominated flame retardant may have a Retained Mass at 650°C of 0 wt% or greater, or 1 wt% or greater, or 3 wt% or greater, or 5 wt% or greater, or 10 wt% or greater, or 13 wt% or greater, or 15 wt% or greater, or 18 wt% or greater, or 20 wt% or greater, or 25 wt% or greater, or 30 wt% or greater, or 35 wt% or greater, or 40 wt% or greater, or 45 wt% or greater, while at the same time, 50 wt% or less, or 45 wt% or less, or 40 wt% or less, or 35 wt% or less, or 30 wt% or less, or 25 wt% or less, or 20 wt% or less, or 18 wt% or less, or 15 wt% or less, or 13 wt% or less, or 10 wt% or less, or 5 wt% or less, or 3 wt% or less, or 1 wt% or less. The Retained Mass at 650°C is an indication of the brominated flame retardant's sole ability to form char, which is often a carbonaceous material that insulates the material being protected, slowing pyrolysis and creating a barrier that hinders diffusion of oxygen/air as well as the vaporization of additional fuel gases generated by pyrolysis of polymeric composition into combustion zone. Thus, in terms of the well-known fire triangle, the formation of char is critically important to impart flame retardance as it both reduces heat transmission and slows down fire propagation.

The brominated flame retardant may be a polymeric brominated flame retardant. The polymeric brominated flame retardant is aromatically brominated. As used herein, the term "aromatically brominated" refers to the bonding of the bromine to aromatic moieties of the polymeric brominated flame retardant as opposed to aliphatic moieties. In a specific example, the polymeric brominated flame retardant may be aromatically brominated polystyrene. An example of an aromatically brominated polystyrene has a CAS number of 88497-56-7 and is commercially available under the tradename SAYTEX™ HP-3010 from Albemarle, Charlotte, North Carolina, USA. Aromatically brominated polystyrene has a bromine content of 68.5 wt%.

The polymeric brominated flame retardant has a weight average molecular weight of from 2,000 grams per mol (g/mol) to 30,000 g/mol as measured using Gel Permeation Chromatography. For example, the weight average molecular weight of the polymeric brominated flame retardant may be 2,000 g/mol or greater, or 3,000 g/mol or greater, or 4,000 g/mol or greater, or 6,000 g/mol or greater, or 8,000 g/mol or greater, or 10,000 g/mol or greater, or 12,000 g/mol or greater, or 14,000 g/mol or greater, or 16,000 g/mol or greater, or 18,000 g/mol or greater, or 20,000 g/mol or greater, or 22,000 g/mol or greater, or 24,000 g/mol or greater, or 26,000 g/mol or greater, or 28,000 g/mol or greater, while at the same time, 30,000 g/mol or less, or 28,000 g/mol or less, or 26,000 g/mol or less, or 24,000 g/mol or less, or 22,000 g/mol or less, or 20,000 g/mol or less, or 18,000 g/mol or less, or 16,000 g/mol or less, or 14,000 g/mol or less, or 12,000 g/mol or less, or 10,000 g/mol or less, or 8,000 g/mol or less, or 6,000 g/mol or less, or 4,000 g/mol or less, or 2,000 g/mol or less as measured using Gel Permeation Chromatography.

The polymeric composition may comprise from 5 wt% to 50 wt% of the brominated flame retardant based on the total weight of the polymeric composition. For example, the polymeric composition may comprise 5 wt% or greater, 10 wt% or greater, 11 wt% or greater, or 13 wt% or greater, or 15 wt% or greater, or 20 wt% or greater, or 25 wt% or greater, or 30 wt% or greater, or 31 wt% or greater, or 32 wt% or greater, or 33 wt% or greater, or 34 wt% or greater, or 35 wt% or greater, or 36 wt% or greater, or 37 wt% or greater, or 38 wt% or greater, or 39 wt% or greater, or 40 wt% or greater, or 41 wt% or greater, or 42 wt% or greater, or 43 wt% or greater, or 44 wt% or greater, or 45 wt% or greater, or 46 wt% or greater, or 47 wt% or greater, or 48 wt% or greater, or 49 wt% or greater, while at the same time, 50 wt% or less, or 49 wt% or less, or 48 wt% or less, or 47 wt% or less, or 46 wt% or less, or 45 wt% or less, or 44 wt% or less, or 43 wt% or less, or 42 wt% or less, or 41 wt% or less, or 40 wt% or less, or 39 wt% or less, or 38 wt% or less, or 37 wt% or less, or 36 wt% or less, or 35 wt% or less, or 34 wt% or less, or 33 wt% or less, or 32 wt% or less, or 31 wt% or less, or 30 wt% or less, or 25 wt% or less, or 20 wt% or less, or 15 wt% or less, or 13 wt% or less, or 11 wt% or less, or 10 wt% or less of the brominated flame retardant based on a total weight of the polymeric composition.

*Antimony Trioxide*

The polymeric composition comprises antimony trioxide as a flame retardant synergist. Antimony trioxide ($Sb_2O_3$) has the CAS number 1309-64-4 and the following Structure (II):

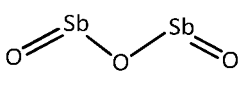

Structure (II)

Antimony trioxide has a molecular weight (Mw) of 291.518 grams per mole (g/mol). One gram of antimony trioxide ($Sb_2O_3$) contains 0.835345774 grams antimony (Sb). Antimony trioxide is commercially available under the tradename MICROFINE™ AO9 from Great Lakes Solution, and BRIGHTSUN™ HB from China Antimony Chemicals Co., Ltd. The polymeric composition may comprise 5 wt% to 50 wt% of the antimony trioxide based on the total weight of the polymeric composition. For example, the polymeric composition may comprise 5 wt% or greater, 10 wt% or greater, 11 wt% or greater, or 13 wt% or greater, or 15 wt% or greater, or 20 wt% or greater, or 25 wt% or greater, or 30 wt% or greater, or 31 wt% or greater, or 32 wt% or greater, or 33 wt% or greater, or 34 wt% or greater, or 35 wt% or greater,

or 36 wt% or greater, or 37 wt% or greater, or 38 wt% or greater, or 39 wt% or greater, or 40 wt% or greater, or 41 wt% or greater, or 42 wt% or greater, or 43 wt% or greater, or 44 wt% or greater, or 45 wt% or greater, or 46 wt% or greater, or 47 wt% or greater, or 48 wt% or greater, or 49 wt% or greater, while at the same time, 50 wt% or less, or 49 wt% or less, or 48 wt% or less, or 47 wt% or less, or 46 wt% or less, or 45 wt% or less, or 44 wt% or less, or 43 wt% or less, or 42 wt% or less, or 41 wt% or less, or 40 wt% or less, or 39 wt% or less, or 38 wt% or less, or 37 wt% or less, or 36 wt% or less, or 35 wt% or less, or 34 wt% or less, or 33 wt% or less, or 32 wt% or less, or 31 wt% or less, or 30 wt% or less, or 25 wt% or less, or 20 wt% or less, or 15 wt% or less, or 13 wt% or less, or 11 wt% or less, or 10 wt% or less of the antimony trioxide based on a total weight of the polymeric composition.

*Zinc Flame Retardant Synergist*

The polymeric composition may comprise a zinc flame retardant synergist. As used herein, a "zinc flame retardant synergist" is a compound that increases the flame retardancy properties of a flame retardant and comprises the element zinc. The zinc flame retardant synergist may be selected from the group consisting of zinc borate, zinc carbonate, zinc carbonate hydroxide, hydrated zinc borate, zinc phosphate, zinc stannate, zinc hydrostannate, zinc sulfide, zinc oxide and combinations thereof. One example of a zinc flame retardant synergist is commercially available as FIREBRAKE™ ZB-fine from Rio Tinto, London, England.

The polymeric composition may comprise 0 wt% or greater, or 0.5 wt% or greater, or 1 wt% or greater, or 2 wt% or greater, or 3 wt% or greater, or 4 wt% or greater, or 5 wt% or greater, or 6 wt% or greater, or 7 wt% or greater, or 8 wt% or greater, or 9 wt% or greater, or 10 wt% or greater, or 11 wt% or greater, or 12 wt% or greater, or 13 wt% or greater, or 14 wt% or greater, while at the same time, 15 wt% or less, or 14 wt% or less, or 13 wt% or less, or 12 wt% or less, or 11 wt% or less, or 10 wt% or less, or 9 wt% or less, or 8 wt% or less, or 7 wt% or less, or 6 wt% or less, or 5 wt% or less, or 4 wt% or less, or 3 wt% or less, or 2 wt% or less, or 1 wt% or less of the zinc flame retardant synergist.

*Second Polyolefin*

The polymeric composition may include an optional second polyolefin. As with the silane functionalized polyolefin, the second polyolefin comprises polymerized $\alpha$-olefins and optionally unsaturated esters. The $\alpha$-olefin may include $C_2$, or $C_3$ to $C_4$, or $C_6$, or $C_8$, or $C_{10}$, or $C_{12}$, or $C_{16}$, or $C_{18}$, or $C_{20}$ $\alpha$-olefins, such as ethylene, propylene, 1-butene, 1-hexene, 4-methyl-1-pentene, and 1-octene. The unsaturated esters can be alkyl acrylates, alkyl methacrylates, or vinyl carboxylates. The second polyolefin may not be silane functionalized. The second polyolefin may have a crystallinity at 23°C from 0 wt% to 80 wt% as measured according to Crystallinity Testing as provided below. For example, the crystallinity at 23°C of the second polyolefin may be 0 wt% or greater, or 5 wt% or greater, or 10 wt% or greater, or 15 wt% or greater, or 20 wt% or greater, or 25 wt% or greater, or 30 wt% or greater, or 35 wt% or greater, or 40 wt% or greater, or 45 wt% or greater, or 50 wt% or greater, or 55 wt% or greater, or 60 wt% or greater, or 65 wt% or greater, or 70 wt% or greater, or 75 wt% or greater, while at the same time, 80 wt% or less, or 75 wt% or less, or 70 wt% or less, or 65 wt% or less, or 60 wt% or less, or 55 wt% or less, or 50 wt% or less, or 45 wt% or less, or 40 wt% or less, or 35 wt% or less, or 30 wt% or less, or 25 wt% or less, or 20 wt% or less, or 15 wt% or less, or 10 wt% or less as measured according to Crystallinity Testing.

The second polyolefin may be an ultra-low-density polyethylene or a linear low-density polyethylene or a high-density polyethylene or an ethylene ethyl acrylate copolymer or an ethylene vinyl acetate copolymer. The density of the second polyolefin may be 0.860 g/cc or greater, 0.870 g/cc or greater, or 0.880 g/cc or greater, or 0.890 g/cc or greater, or 0.900 g/cc or greater, or 0.904 g/cc or greater, or 0.910 g/cc or greater, or 0.915 g/cc or greater, or 0.920 g/cc or greater, or 0.921 g/cc or greater, or 0.922 g/cc or greater, or 0.925 g/cc to 0.930 g/cc or greater, or 0.935 g/cc or greater, while at the same time, 0.970 g/cc or less, or 0.960 g/cc or less, or 0.950 g/cc or less, or 0.940 g/cc or less, or 0.935 g/cc or less, or 0.930 g/cc or less, or 0.925 g/cc or less, or 0.920 g/cc or less, or 0.915 g/cc or less, or 0.910 g/cc or less, or 0.905 g/cc or less, or 0.900 g/cc or less as measured by ASTM D792.

The second polyolefin has a melt index as measured according to ASTM D1238 under the conditions of 190°C/2.16 kg weight. The melt index of the second polyolefin may be 0.5 g/10min or greater, or 1.0 g/10min or greater, or 1.5 g/10min or greater, or 2.0 g/10min or greater, or 2.5 g/lOmin or greater, or 3.0 g/lOmin or greater, or 3.5 g/lOmin or greater, or 4.0 g/10min or greater, or 4.5 g/10min or greater, while at the same time, 30.0 g/10 min or less, or 25.0 g/10 min or less, or 20.0 g/10 min or less, or 15.0 g/10 min or less, or 10.0 g/10 min or less, or 5.0 g/lOmin or less, or 4.5 g/lOmin or less, or 4.0 g/lOmin or less, or 3.5 g/lOmin or less, or 3.0 g/lOmin or less, or 2.5 g/10min or less, or 2.0 g/10min or less, or 1.5 g/10min or less, or 1.0 g/lOmin or less.

The polymeric composition may comprise from 0 wt% to 30 wt% of second polyolefin based on the total weight of the polymeric composition. The polymeric composition may comprise 0 wt% or greater, or 5 wt% or greater, or 10 wt% or greater, or 15 wt% or greater, or 20 wt% or greater, or 25 wt% or greater, while at the same time, 30 wt% or less, or 25 wt% or less, or 20 wt% or less, or 15 wt% or less, or 10 wt% of the second polyolefin.

*Additives*

The polymeric composition may include one or more additives. Nonlimiting examples of suitable additives include antioxidants, colorants, corrosion inhibitors, lubricants, silanol condensation catalysts, ultraviolet (UV) absorbers or stabilizers, anti-blocking agents, flame retardants, coupling agents, compatibilizers, plasticizers, fillers, processing aids, and combinations thereof.

The polymeric composition may include an antioxidant. Nonlimiting examples of suitable antioxidants include phenolic antioxidants, thio-based antioxidants, phosphate-based antioxidants, and hydrazine-based metal deactivators. Suitable phenolic antioxidants include high molecular weight hindered phenols, methyl-substituted phenol, phenols having substituents with primary or secondary carbonyls, and multifunctional phenols such as sulfur and phosphorous-containing phenol. Representative hindered phenols include 1,3,5-trimethyl-2,4,6-tris-(3,5-di-tert-butyl-4-hydroxybenzyl)-benzene; pentaerythrityl tetrakis-3(3,5-di-tert-butyl-4-hydroxyphenyl)-propionate; n-octadecyl-3(3,5-di-tert-butyl-4-hydroxyphenyl)-propionate; 4,4'-methylenebis(2,6-tert-butyl-phenol); 4,4'-thiobis(6-tert-butyl-o-cresol); 2,6-di-tertbutylphenol; 6-(4-hydroxyphenoxy)-2,4-bis(n-octyl-thio)-1,3,5 triazine; di-n-octylthio)ethyl 3,5-di-tert-butyl-4-hydroxy-benzoate; and sorbitol hexa[3-(3,5-di-tert-butyl-4-hydroxy-phenyl)-propionate]. In an embodiment, the composition includes pentaerythritol tetrakis(3-(3,5-di-tert-butyl-4-hydroxyphenyl)propionate), commercially available as Irganox™ 1010 from BASF. A nonlimiting example of a suitable methyl-substituted phenol is isobutylidenebis(4,6-dimethylphenol). A nonlimiting example of a suitable hydrazine-based metal deactivator is oxalyl bis(benzylidiene hydrazide). In an embodiment, the composition contains from 0 wt%, or 0.001 wt%, or 0.01 wt%, or 0.02 wt%, or 0.05 wt%, or 0.1 wt%, or 0.2 wt %, or 0.3 wt %, or 0.4 wt% to 0.5 wt%, or 0.6 wt %, or 0.7 wt%, or 0.8 wt %, or 1.0 wt %, or 2.0 wt%, or 2.5 wt%, or 3.0 wt% antioxidant, based on total weight of the composition.

The polymeric composition may include a silanol condensation catalyst, such as Lewis and Brønsted acids and bases. A "silanol condensation catalyst" promotes crosslinking of the silane functionalized polyolefin through hydrolysis and condensation reactions. Lewis acids are chemical species that can accept an electron pair from a Lewis base. Lewis bases are chemical species that can donate an electron pair to a Lewis acid. Nonlimiting examples of suitable Lewis acids include the tin carboxylates such as dibutyl tin dilaurate (DBTDL), dimethyl hydroxy tin oleate, dioctyl tin maleate, di-n-butyl tin maleate, dibutyl tin diacetate, dibutyl tin dioctoate, stannous acetate, stannous octoate, and various other organo-metal compounds such as lead naphthenate, zinc caprylate and cobalt naphthenate. Nonlimiting examples of suitable Lewis bases include the primary, secondary and tertiary amines. Nonlimiting examples of suitable Brønsted acids are methanesulfonic acid, benzenesulfonic acid, dodecylbenzenesulfonic acid, naphthalenesulfonic acid, or an alkylnaphthalenesulfonic acid. The silanol condensation catalyst may comprise a blocked sulfonic acid. The blocked sulfonic acid may be as defined in US 2016/0251535 A1 and may be a compound that generates in-situ a sulfonic acid upon heating thereof, optionally in the presence of moisture or an alcohol. Examples of blocked sulfonic acids include amine-sulfonic acid salts and sulfonic acid alkyl esters. The blocked sulfonic acid may consist of carbon atoms, hydrogen atoms, one sulfur atom, and three oxygen atoms, and optionally a nitrogen atom. These catalysts are typically used in moisture cure applications. The polymeric composition includes from 0 wt%, or 0.001 wt%, or 0.005 wt%, or 0.01 wt%, or 0.02 wt%, or 0.03 wt% to 0.05 wt%, or 0.1 wt%, or 0.2 wt%, or 0.5 wt%, or 1.0 wt%, or 3.0 wt%, or 5.0 wt%, or 10 wt% or 20 wt% silanol condensation catalyst, based on the total weight of the composition. The silanol condensation catalyst is typically added to the article manufacturing-extruder (such as during cable manufacture) so that it is present during the final melt extrusion process. As such, the silane functionalized polyolefin may experience some crosslinking before it leaves the extruder with the completion of the crosslinking after it has left the extruder, typically upon exposure to moisture (e.g., a sauna, hot water bath or a cooling bath) and/or the humidity present in the environment in which it is stored, transported or used.

The silanol condensation catalyst may be included in a catalyst masterbatch blend with the catalyst masterbatch being included in the composition. Nonlimiting examples of suitable catalyst masterbatches include those sold under the trade name SI-LINK™ from The Dow Chemical Company, including SI-LINK™ DFDA-5481 Natural and SI-LINK™ AC DFDA-5488 NT. In an embodiment, the composition contains from 0 wt%, or 0.001 wt%, or 0.01 wt%, or 0.5 wt%, or 1.0 wt%, or 2.0 wt%, or 3.0 wt%, or 4.0 wt% to 5.0 wt%, or 6.0 wt%, or 7.0 wt%, or 8.0 wt%, or 9.0 wt%, or 10.0 wt%, or 15.0 wt%, or 20.0 wt% catalyst masterbatch, based on total weight of the composition.

The polymeric composition may include an ultraviolet (UV) absorber or stabilizer. A nonlimiting example of a suitable UV stabilizer is a hindered amine light stabilizer (HALS). A nonlimiting example of a suitable HALS is 1,3,5-Triazine-2,4,6-triamine, N,N-1,2-ethanediylbisN-3-4,6-bisbutyl(1,2,2,6,6-pentamethyl-4-piperidinyl)amino-1,3,5-triazin-2-ylaminopropyl-N,N-dibutyl-N,N-bis(1,2,2,6,6-pentamethyl-4-piperidinyl)-1,5,8,12-tetrakis[4,6-bis(n-butyl-n-1,2,2,6,6-pentamethyl-4-piperidylamino)-1,3,5-triazin-2-yl]-1,5,8,12-tetraazadodecane, which is commercially available as SABO™ STAB UV-119 from SABO S.p.A. of Levate, Italy. In an embodiment, the composition contains from 0 wt%, or 0.001 wt%, or 0.002 wt%, or 0.005 wt%, or 0.006 wt% to 0.007 wt%, or 0.008 wt%, or 0.009 wt%, or 0.01 wt%, or 0.2 wt %, or 0.3 wt %, or 0.4 wt%, or 0.5 wt%, 1.0 wt %, or 2.0 wt%, or 2.5 wt%, or 3.0 wt% UV absorber or stabilizer, based on total weight of the composition.

The polymeric composition includes a filler. Nonlimiting examples of suitable fillers include carbon black, organo-clay, aluminum trihydroxide, magnesium hydroxide, calcium carbonate, hydromagnesite, huntite, hydrotalcite, boehmite, magnesium carbonate, magnesium phosphate, calcium hydroxide, calcium sulfate, silica, silicone gum, talc and combinations thereof. The filler may or may not have flame retardant properties. In an embodiment, the filler is coated with a material that will prevent or retard any tendency that the filler might otherwise have to interfere with the silane cure reaction. Stearic acid is illustrative of such a filler coating. In an embodiment, the composition contains from 0 wt%, or 0.01 wt%, or 0.02 wt%, or 0.05 wt%, or 0.07 wt%, or 0.1 wt%, or 0.2 wt %, or 0.3 wt %, or 0.4 wt% to 0.5 wt%, or 0.6 wt %, or 0.7 wt%, or 0.8 wt %, or 1.0 wt %, or 2.0 wt%, or 2.5 wt%, or 3.0 wt%, or 5.0 wt%, or 8.0 wt%, or 10.0 wt%, or 20 wt% filler, based on total weight of the polymeric composition.

In an embodiment, the composition includes a processing aid. Nonlimiting examples of suitable processing aids include oils, polydimethylsiloxane, organic acids (such as stearic acid), and metal salts of organic acids (such as zinc stearate). In an embodiment, the composition contains from 0 wt%, or 0.01 wt%, or 0.02 wt%, or 0.05 wt%, or 0.07 wt%, or 0.1 wt%, or 0.2 wt %, or 0.3 wt %, or 0.4 wt% to 0.5 wt%, or 0.6 wt %, or 0.7 wt%, or 0.8 wt %, or 1.0 wt %, or 2.0 wt%, or 2.5 wt%, or 3.0 wt%, or 5.0 wt%, or 10.0 wt% processing aid, based on total weight of the composition.

In an embodiment, the composition contains from 0 wt%, or greater than 0 wt%, or 0.001 wt%, or 0.002 wt%, or 0.005 wt%, or 0.006 wt% to 0.007 wt%, or 0.008 wt%, or 0.009 wt%, or 0.01 wt%, or 0.2 wt %, or 0.3 wt %, or 0.4 wt%, or 0.5 wt%, 1.0 wt %, or 2.0 wt%, or 2.5 wt%, or 3.0 wt%, or 4.0 wt%, or 5.0 wt% to 6.0 wt%, or 7.0 wt%, or 8.0 wt%, or 9.0 wt%, or 10.0 wt%, or 15.0 wt%, or 20.0 wt%, or 30 wt%, or 40 wt%, or 50 wt% additive, based on the total weight of the composition.

One or more of the brominated flame retardant, antimony trioxide, zinc flame retardant synergist and the additives may be combined as a pre-mixed masterbatch. Such masterbatches are commonly formed by dispersing the brominated flame retardant, antimony trioxide and/or additives into an inert plastic resin, e.g., a low-density polyethylene. Masterbatches are conveniently formed by melt compounding methods.

One or more of the components or masterbatches may be dried before compounding or extrusion, or a mixture of components or masterbatches is dried after compounding or extrusion, to reduce or eliminate potential scorch that may be caused from moisture present in or associated with the component, e.g., filler. The compositions may be prepared in the absence of a silanol condensation catalyst for extended shelf life, and the silanol condensation catalyst may be added as a final step in the preparation of a cable construction by extrusion processes.

*Sb:Br molar ratio*

The polymeric composition contains antimony trioxide flame retardant synergist and brominated flame retardant in such relative quantities that the antimony (Sb) and bromine (Br) is at a molar ratio (Sb:Br molar ratio) from 0.35 to 0.98. For example, the polymeric composition has a Sb:Br molar ratio of 0.35 or greater, or 0.40 or greater, or 0.45 or greater, or 0.50 or greater, or 0.55 or greater, or 0.60 or greater, or 0.65 or greater, or 0.70 or greater, or 0.75 or greater, or 0.80 or greater, or 0.85 or greater, or 0.90 or greater, or 0.95 or greater, while at the same time, 0.98 or less, or 0.95 or less, or 0.90 or less, or 0.85 or less, or 0.80 or less, or 0.75 or less, or 0.70 or less, or 0.65 or less, or 0.60 or less, or 0.55 or less, or 0.50 or less, or 0.45 or less, or 0.40 or less. The Sb:Br molar ratio is calculated in accordance with the following Equation (1):

$$Sb{:}Br\ molar\ ratio = \frac{moles\ of\ antimony\ in\ polymeric\ composition}{moles\ of\ bromine\ in\ polymeric\ composition} \qquad \text{Eq. (1)}$$

The number of moles of antimony (Sb) in the polymeric composition from the antimony trioxide ($Sb_2O_3$) is calculated in accordance with the following Equation (1A):

$$moles\ of\ antimony\ in\ polymeric\ composition = 2 \times moles\ of\ antimony\ trioxide = \frac{2(grams\ Sb_2O_3\ in\ composition)}{\text{molecular weight of antimony trioxide}} \qquad \text{Eq (1A).}$$

wherein, the molecular weight of antimony trioxide is 291.52 g/mol.

The number of moles of bromine in the polymeric composition from the brominated flame retardant is calculated in accordance with the following Equation (1B):

$$moles\ of\ bromine\ in\ \text{polymeric}\ composition = \frac{(grams\ of\ bromine\ in\ composition)}{\text{atomic weight of bromine}} \qquad \text{Eq. (1B).}$$

wherein, the atomic weight of bromine is 79.904 g/mol.

*Zn:Br molar ratio*

The polymeric composition contains zinc flame retardant synergists and brominated filler in such relative quantities that the zinc (Zn) and bromine (Br) at a molar ratio (Zn:Br molar ratio) from 0.0 to 0.185. For example, the Zn:Br molar ratio may be 0 or greater, or 0.010 or greater, or 0.020 or greater, or 0.030 or greater, or 0.040 or greater, or 0.050 or greater, or 0.060 or greater, or 0.070 or greater, or 0.080 or greater, or 0.090 or greater, or 0.100 or greater, or 0.110 or greater, or 0.120 or greater, or 0.130 or greater, or 0.140 or greater, or 0.150 or greater, or 0.160 or greater, or 0.170 or greater, or 0.180 or greater, while at the same time, 0.185 or less, or 0.180 or less, or 0.170 or less, or 0.160 or less, or 0.150 or less, or 0.140 or less, or 0.130 or less, or 0.120 or less, or 0.110 or less, or 0.100 or less, or 0.090 or less, or 0.080 or less, or 0.070 or less, or 0.060 or less, or 0.050 or less, or 0.040 or less, or 0.030 or less, or 0.020 or less, or 0.010 or less. The Zn:Br molar ratio is calculated in accordance with the following Equation (2):

$$Zn{:}\,Br\ molar\ ratio = \frac{moles\ of\ zinc\ in\ polymeric\ composition}{moles\ of\ bromine\ in\ polymeric\ composition} \qquad \text{Eq. (2)}$$

The number of moles of bromine in the polymeric composition from the brominated flame retardant is calculated in accordance with Equation (1B):
The number of moles of zinc in the polymeric composition from the zinc flame retardant synergist is calculated in accordance with the following Equation (2A):

$$moles\ of\ zinc\ in\ \text{polymeric}\ composition = moles\ of\ zinc\ oxide\ in\ polymr\ composition = \frac{grams\ of\ zinc\ oxide\ in\ composition}{\text{molecular weight of zinc oxide}} \qquad \text{Eq. (2A).}$$

wherein, the molecular weight of zinc oxide is 81.406 g/mol.

The grams of bromine within the polymeric composition can readily be determined from the amount of brominated flame retardant in the polymeric composition and the amount of bromine in the brominated flame retardant. The grams of zinc within the polymeric composition can readily be determined from the amount of zinc flame retardant synergist in the polymeric composition and the amount of zinc in the zinc flame retardant synergist.

*Coated Conductor*

The present disclosure also provides a coated conductor. The coated conductor includes a conductor and a coating on the conductor, the coating including the polymeric composition. The polymeric composition is at least partially disposed around the conductor to produce the coated conductor.

The process for producing a coated conductor includes mixing and heating the polymeric composition to at least the melting temperature of the silane functionalized polyolefin in an extruder, and then coating the polymeric melt blend onto the conductor. The term "onto" includes direct contact or indirect contact between the polymeric melt blend and the conductor. The polymeric melt blend is in an extrudable state.

The polymeric composition is disposed around on and/or around the conductor to form a coating. The coating may be one or more inner layers such as an insulating layer. The coating may wholly or partially cover or otherwise surround or encase the conductor. The coating may be the sole component surrounding the conductor. Alternatively, the coating may be one layer of a multilayer jacket or sheath encasing the metal conductor. The coating may directly contact the conductor. The coating may directly contact an insulation layer surrounding the conductor.

The resulting coated conductor (cable) is cured at humid conditions for a sufficient length of time such that the coating reaches a desired degree of crosslinking. The temperature during cure is generally above 0°C. In an embodiment, the cable is cured (aged) for at least 4 hours in a 90°C water bath. In an embodiment, the cable is cured (aged) for up to 30 days at ambient conditions comprising an air atmosphere, ambient temperature (e.g., 20°C to 40°C), and ambient relative humidity (e.g., 10 to 96 percent relative humidity (% RH)).

The coated conductor may pass the horizontal burn test. To pass the horizontal burn test, the coated conductor must have a total char of less than 100 mm and the cotton placed underneath must not ignite. A time to self-extinguish of less than 80 seconds is desirable. The coated conductor may have a total char during the horizontal burn test from 0 mm, or 5 mm, or 10 mm to 50 mm, or 55 mm, or 60 mm, or 70 mm, or 75 mm, or 80 mm, or 90 mm, or less than 100 mm. The coated conductor may have a time to self-extinguish during the horizontal burn test from 0 seconds, or 5

seconds, or 10 seconds to 30 seconds, or 35 seconds, or 40 seconds, or 50 seconds, or 60 seconds, or 70 seconds, or less than 80 seconds.

The coated conductor may pass the VW-1 test. To pass the VW-1 test and thus have a VW-1 rating, the coated conductor must self-extinguish within 60 seconds (≤ 60 seconds) of the removal of a burner for each of five 15 second flame impingement cycles, exhibit less than or equal to 25% flag burn, and exhibit no cotton burn. The VW-1 test is more stringent than the horizontal burn test. In an embodiment, the coated conductor has a time to self-extinguish during the VW-1 test from 0 seconds to 20 seconds, or 30 seconds, or 40 seconds, or 50 seconds, or 60 seconds, or less than 60 seconds during each of the 5 individual cycles. In an embodiment, the coated conductor has a no char to flag length during the VW-1 test from 20 mm, or 40 mm, or 50 mm, or 75 mm to 100 mm, or 110 mm, or 120 mm, or 130 mm, or 140 mm, or 150 mm, or 160 mm, or 180 mm, or 200 mm, or 250 mm, or 300 mm, or 350 mm, or 400 mm, or 500 mm, or 508 mm.

The coated conductor has one, some, or all of the following properties: (i) a total char during the horizontal burn test from 0 mm to less than 100 mm; (ii) a time to self-extinguish during the horizontal burn test from 0 seconds to less than 80 seconds; (iii) a time to self-extinguish during the VW-1 test from 0 seconds to less than 60 seconds during each of the 5 individual cycles. The coated conductor may pass the horizontal burn test and/or the VW-1 burn test.

## Examples

*Test Methods*

*Density:* Density is measured in accordance with ASTM D792, Method B. The result is recorded in grams (g) per cubic centimeter (g/cc).

*Melt Index*: Melt index (MI) is measured in accordance with ASTM D1238, Condition 190°C/2.16 kilogram (kg) weight and is reported in grams eluted per 10 minutes (g/10 min).

*Thermogravimetric Analysis*: Thermogravimetric Analysis testing is performed using a Q5000 thermogravimetric analyzer from TA INSTRUMENTS™. Perform Thermogravimetric Analysis testing by placing a sample of the material in the thermogravimetric analyzer on platinum pans under nitrogen at flow rate of 100 $cm^3$/minute and, after equilibrating at 40°C, raising the temperature from 40°C to 650°C at a rate of 20°C/minute while measuring the mass of the sample. From the curve of data generated associating a temperature with a % of mass remaining, determine the temperature at which 5% of the mass of the sample was lost to get the Temperature of 5% Mass Loss. From the curve of data generated associating a temperature with a % of mass remaining, determine the mass% of the sample remaining when the Thermogravimetric Analysis reaches 650° C to get the Retained Mass at 650°C.

*Crystallinity Testing*: determine melting peaks and percent (%) or weight percent (wt%) crystallinity of ethylene-based polymers at 23°C using Differential Scanning Calorimeter (DSC) instrument DSC Q1000 (TA Instruments). (A) Baseline calibrate DSC instrument. Use software calibration wizard. Obtain a baseline by heating a cell from -80° to 280° C. without any sample in an aluminum DSC pan. Then use sapphire standards as instructed by the calibration wizard. Analyze 1 to 2 milligrams (mg) of a fresh indium sample by heating the standards sample to 180°C, cooling to 120°C at a cooling rate of 10°C/minute, then keeping the standards sample isothermally at 120°C for 1 minute, followed by heating the standards sample from 120°C to 180°C at a heating rate of 10°C/minute. Determine that indium standards sample has heat of fusion = 28.71 ± 0.50 Joules per gram (J/g) and onset of melting = 156.6° ± 0.5°C (B) Perform DSC measurements on test samples using the baseline calibrated DSC instrument. Press test sample of semi-crystalline ethylenic polymer into a thin film at a temperature of 160°C. Weigh 5 to 8 mg of test sample film in aluminum DSC pan. Crimp lid on pan to seal pan and ensure closed atmosphere. Place lid-sealed pan in DSC cell, equilibrate cell at 30°C, and then heat at a rate of about 100° C/minute to 190°C, keep sample at 190°C for 3 minutes, cool sample at a rate of 10°C/minute to -60°C to obtain a cool curve heat of fusion ($H_f$), and keep isothermally at -60°C for 3 minutes. Then heat sample again at a rate of 10°C/minute to 190°C to obtain a second heating curve heat of fusion ($\Delta H_f$). Using the second heating curve, calculate the "total" heat of fusion (J/g) by integrating from -20°C (in the case of ethylene homopolymers, copolymers of ethylene and hydrolysable silane monomers, and ethylene alpha olefin copolymers of density greater than or equal to 0.90g/$cm^3$) or -40°C (in the case of copolymers of ethylene and unsaturated esters, and ethylene alpha olefin copolymers of density less than 0.90g/$cm^3$) to end of melting. Using the second heating curve, calculate the "room temperature" heat of fusion (J/g) from 23°C (room temperature) to end of melting by dropping perpendicular at 23°C. Measure and report "total crystallinity" (computed from "total" heat of fusion) as well as "Crystallinity at room temperature" (computed from 23°C heat of fusion). Crystallinity is measured and reported as percent (%) or weight percent (wt%) crystallinity of the polymer from the test sample's second heating curve heat of fusion ($\Delta H_f$) and its normalization to the heat of fusion of 100% crystalline polyethylene, where % crystallinity or wt% crystallinity = ($\Delta H_f$*100%)/292 J/g, wherein $\Delta H_f$ is as defined above, * indicates mathematical multiplication, / indicates mathematical division, and 292 J/g is a literature value of heat of fusion ($\Delta H_f$) for a 100% crystalline polyethylene.

*VW-7 Burn Test:* The VW-1 Burn Test is conducted by subjecting three or six samples of a specific coated

conductor to the protocol of UL 2556 Section 9.4. This involves five 15-second applications of a 125 mm flame impinging on at an angle 20° on a vertically oriented specimen 610 mm (24 in) in length. A strip of kraft paper 12.5 ± 1 mm (0.5 ± 0.1 in) is affixed to the specimen 254 ± 2 mm (10 ± 0.1 in) above the impingement point of the flame. A continuous horizontal layer of cotton is placed on the floor of the test chamber, centered on the vertical axis of the test specimen, with the upper surface of the cotton being 235 ± 6 mm (9.25 ± 0.25 in) below the point at which the tip of the blue inner cone of the flame impinges on the specimen. Test failure is based upon the criteria of either burning the 25% of the kraft paper tape flag, ignition of the cotton batting or if the specimen burns longer than 60 seconds on any of the five flame applications. As an additional measure of burn performance, the length of uncharred insulation ("no char to flag length") is measured at the completion of the test. The VW-1 cotton ignited indicates if falling material ignited the cotton bed.

*Horizontal Burn Test*: The Horizontal Burn Test is conducted in accordance with UL-2556. The test is performed by placing the coated conductor in a horizontal position. Cotton is placed underneath the coated conductor. A burner is set at a 20° angle relative to the horizontal sample (14 AWG copper wire with 30 mil coating wall thickness). A one-time flame is applied to the middle of the sample for 30 seconds. The sample fails when (i) the cotton ignites and/or (ii) the sample chars in excess of 100 mm. Char length is measured in accordance with UL-1581, 1100.4. The test is repeated 3 times.

*Molecular Weight*: Unless otherwise denoted herein, molecular weight is the weight average molecular weight and is determined by Gel Permeation Chromatography. Gel permeation chromatography (GPC) is performed on a Waters 150°C high temperature chromatographic unit equipped with three linear mixed bed columns (Polymer Laboratories (10 micron particle size)), operating at a system temperature of 140°C. The solvent is 1,2,4-trichlorobenzene from which about 0.5% by weight solutions of the samples are prepared for injection. The flow rate is 1.0 milliliter/minute (mm/min) and the injection size is 100 microliters (:1). The molecular weight determination is deduced by using narrow molecular weight distribution polystyrene standards (from Polymer Laboratories) in conjunction with their elution volumes. The equivalent polyethylene molecular weights are determined by using appropriate Mark-Houwink coefficients for polyethylene and polystyrene (as described by Williams and Ward in Journal of Polymer Science, Polymer Letters, Vol. 6, (621) 1968) to derive the equation:

$$M_{polyethylene} = (a)(M_{polystyrene})^b$$

In this equation, a=0.4316 and b=1.0. Weight average molecular weight (Mw) is calculated in the usual manner according to the formula:

$$M_w = \Sigma(w_i)(M_i)$$

in which $w_i$ and Mi are the weight fraction and molecular weight respectively of the $i^{th}$ fraction eluting from the GPC column..

*Materials*

The materials used in the examples are provided below.

SiPO is an ethylene/silane copolymer having a density of 0.922 g/cc, a crystallinity at 23°C of 46.9 wt% and a melt index of 1.5 g/10 min (190°C/2.16 kg) and is commercially available as SI-LINK™ DFDA-5451 NT from The Dow Chemical Company, Midland, Michigan.

LLDPE is a linear low-density polyethylene resin having a density of 0.920 g/cc, a crystallinity at 23°C of 49 wt% and a melt index of 3.5 g/10 min (190°C/2.16 kg) and is commercially available as DOW™ LLDPE 1648 from The Dow Chemical Company, Midland, Michigan.

BRFR 3010 is an aromatically brominated polystyrene having a bromine content of 68.5 wt %, a weight average molecular weight of 4,700 g/mol as measured using Gel Permeation Chromatography, a Temperature of 5% Mass Loss of 373°C as measured according to Thermogravimetric Analysis, a Retained Mass at 650°C of 1.5 mass% as measured according to Thermogravimetric Analysis, and a glass transition temperature of 163°C as measured by Differential Scanning Calorimetry and is commercially available under the tradename Saytex™ HP-3010 from Albemarle, Charlotte, North Carolina, United States.

BRFR 7010 is an aromatically brominated polystyrene having a bromine content of 68.5 wt %, a weight average molecular weight of 264,000 g/mol as measured using Gel Permeation Chromatography, a Temperature of 5% Mass Loss of 376°C as measured according to Thermogravimetric Analysis, a Retained Mass at 650°C of 1.9 mass% as measured according to Thermogravimetric Analysis, and a glass transition temperature of 182°C as measured by Differential Scanning Calorimetry and is commercially available under the tradename Saytex™ HP-7010G from Albemarle, Charlotte, North Carolina, United States.

BRFR 3000 is an aromatically brominated polystyrene having a bromine content of 64 wt %, a weight average molecular weight of 170,000 g/mol as measured using Gel Permeation Chromatography, a Temperature of 5% Mass Loss of 254°C as measured according to Thermogravimetric Analysis, a Retained Mass at 650°C of 7.5 mass% as measured according to Thermogravimetric Analysis, and a softening point of 120°C and is commercially available under the tradename Emerald Innovation™ 3000 from Lanxess, Cologne, Germany.

AT is $Sb_2O_3$ commercially available as BRIGHTSUN™ HB500 from China Antimony Chemicals Co. Ltd, Beijing, China.

ZnFR is zinc oxide commercially available as grade 104 from Zochem LLC, Dickson, TN.

AO1 is a sterically hindered phenolic antioxidant having the chemical name pentaerythritol tetrakis(3-(3,5-di-tert-butyl-4-hydroxyphenyl)propionate), which is commercially available as IRGANOX™ 1010 from BASF, Ludwigshafen, Germany.

AO2 is a phenolic antioxidant (CAS 32687-78-8); density = 1.11 g/cc., 2',3-bis[[3-[3,5-di-tert-butyl-4-hydroxyphenyl]propionyl]]propionohydrazide, and is commercially available as IRGANOX™ 1024 from BASF, Ludwigshafen, Germany.

CM2 is a catalyst masterbatch blend of polyolefins, phenolic compounds, and 2.6 wt% of dibutyltin dilaurate as silanol condensation catalyst.

Catalyst is a dibutyltin dilaurate catalyst having a CAS number of 77-58-7 and commercially available under the tradename FASCAT™ 4202 PMC Organometallix, Mount Laurel, NJ, US.

MB-54 is a masterbatch containing 97 wt% AMPLIFY™ EA 100 Functional Polymer and 3 wt% of CHIMASSORB™ 119, a hindered amine light stabilizer available from BASF. AMPLIFY™ EA 100 Functional Polymer is an ethylene-ethyl acrylate Copolymer (15 wt% ethyl acrylate) having a density of 0.930 g/cc, a crystallinity at 23°C of 33 wt% and a melt index of 1.3 g/10 min (190°C/2.16 kg).

*Sample Preparation*

Inventive Examples ("IE") 1-7 and Comparative Examples ("CE") 1-9 were prepared by melt blending each of the materials provided in Table 1, except the SI-LINK™ AC DFDB-5451 NT, were in a BRABENDER™ mixer at 50 revolutions per minute ("rpm") at temperatures ranging from 160°C to 200°C. The BRFR was added first, and was allowed to preheat in the mixer for five minutes. The LLDPE was then added to the mixer to form a polymeric melt of the two components, which were subsequently mixed for an additional five minutes to homogenize. The balance of materials listed in Table 1, except the SI-LINK™ AC DFDB-5451 NT, were then added to the mixer and further mixed for an additional five minutes to complete the mixing of the masterbatch. The melt blended materials were removed from the mixer and cold-pressed for 3 minutes with room-temperature platens at 2500 psi and were then guillotined into strips. The strips were pelletized in preparation for extrusion. The pellets were then dried in a vacuum oven for 16 hours at 60°C at a pressure of 6772.78 pascals. The pellets were first dry blended with the SI-LINK™ AC DFDB-5451 NT and then melt blended using a ¾ inch BRABENDER™ extruder and a standard polyethylene screw, equipped with a pineapple mixing section. The IE and CE were extruded onto a 14 American wire gauge solid copper wire to form cables having polymeric sheaths of 0.762 millimeter thickness. The set temperature profile on the extruder was 160/170/180/190°C, with measured melt temperatures ranging from 185°C to 195°C. The cables were cured in a 90°C water bath for either 16 hours (IE1-IE4 and CE1-CE6) or 20 hours (IE5-IE7 and CE7-CE9), after which the VW-1 Burn Test and the Horizonal Burn Tests were performed.

*Results*

Tables 1 and 2 provide compositional and burn performance data on IE1-IE8 and CE1-CE9. Table 1 provides the results of VW-1 burn tests carried out on the CE1-CE6 and IE1-IE5. Table 2 provides the results of Horizontal burn tests carried out on the CE7-CE9 and IE6-IE8.

Table 1

| Material | CE1 | IE1 | IE2 | IE3 | CE2 | CE3 | CE4 | CE5 | IE4 | CE6 |
|---|---|---|---|---|---|---|---|---|---|---|
| SiPO (wt%) | 45 | 45 | 45 | 45 | 45 | 45 | 40 | 40 | 45 | 45 |
| LLDPE (wt%) | 9.42 | 9.42 | 9.42 | 9.42 | 9.42 | 9.42 | 13.83 | 13.83 | 9.31 | 12.57 |
| BRFR 3010 (wt%) | 45 | 31.25 | 25.75 | 20.25 | 17.5 | 14.75 | 20.35 | 0 | 24.75 | 0 |
| BRFR 7010 (wt%) | 0 | 0 | 0 | 0 | 0 | 0 | 0 | 20.35 | 0 | 0 |
| BRFR 3000 (wt%) | 0 | 0 | 0 | 0 | 0 | 0 | 0 | 0 | 0 | 18.5 |

(continued)

| Material | CE1 | IE1 | IE2 | IE3 | CE2 | CE3 | CE4 | CE5 | IE4 | CE6 |
|---|---|---|---|---|---|---|---|---|---|---|
| AT (wt%) | 0 | 13.75 | 19.25 | 24.75 | 27.5 | 30.25 | 15.66 | 15.66 | 15.66 | 14.24 |
| ZnFR (wt%) | 0 | 0 | 0 | 0 | 0 | 0 | 4.7 | 4.7 | 4.7 | 4.28 |
| AO1 (wt%) | 0.17 | 0.17 | 0.17 | 0.17 | 0.17 | 0.17 | 0.17 | 0.17 | 0.17 | 0.14 |
| AO2 (wt%) | 0.08 | 0.08 | 0.08 | 0.08 | 0.08 | 0.08 | 0.08 | 0.08 | 0.08 | 0.07 |
| Catalyst (wt%) | 0.12 | 0.12 | 0.12 | 0.12 | 0.12 | 0.12 | 0 | 0 | 0.12 | 0 |
| CM2 (wt%) | 0 | 0 | 0 | 0 | 0 | 0 | 5 | 5 | 0 | 5 |
| MB-54 (wt%) | 0.22 | 0.22 | 0.22 | 0.22 | 0.22 | 0.22 | 0.22 | 0.22 | 0.22 | 0.2 |
| Total Composition Weight (wt%) | 100 | 100 | 100 | 100 | 100 | 100 | 100 | 100 | 100 | 100 |
| Sb:Br Molar Ratio | 0 | 0.35 | 0.6 | 0.98 | 1.26 | 1.64 | 0.62 | 0.62 | 0.51 | 0.51 |
| Zn:Br Molar Ratio | 0 | 0 | 0 | 0 | 0 | 0 | 1.85 | 1.85 | 1.85 | 1.85 |
| Pass VW-1 Test#? | No | Yes | Yes | Yes | No | No | No | No | Yes | N/A |

Table 2

| Material | CE7 | IE5 | IE6 | IE7 | CE8 | CE9 |
|---|---|---|---|---|---|---|
| SiPO (wt%) | 70 | 70 | 70 | 70 | 70 | 70 |
| LLDPE (wt%) | 5.14 | 5.14 | 5.14 | 5.14 | 5.14 | 5.14 |
| BRFR 3010 (wt%) | 24.54 | 17.04 | 14.04 | 11.04 | 9.54 | 8.04 |
| AT (wt%) | 0 | 7.5 | 10.5 | 13.5 | 15 | 16.5 |
| AO1 (wt%) | 0.09 | 0.09 | 0.09 | 0.09 | 0.09 | 0.09 |
| AO2 (wt%) | 0.04 | 0.04 | 0.04 | 0.04 | 0.04 | 0.04 |
| Catalyst (wt%) | 0.07 | 0.07 | 0.07 | 0.07 | 0.07 | 0.07 |
| MB-54 (wt%) | 0.12 | 0.12 | 0.12 | 0.12 | 0.12 | 0.12 |
| Total Composition Weight (wt%) | 100 | 100 | 100 | 100 | 100 | 100 |
| Sb:Br Molar Ratio | 0 | 0.35 | 0.6 | 0.98 | 1.26 | 1.64 |
| Pass Horizontal Burn Test? | No | Yes | Yes | Yes | No | No |

As evident from Table 1, IE1-IE4 comprising a silane functionalized polyolefin; a brominated flame retardant and antimony trioxide are able to pass the VW-1 Burn Test. CE1 is similar in composition to the inventive examples, yet fails to pass the VW-1 Burn Test due to no antimony trioxide (i.e., the Sb:Br molar ratio is 0). CE2 and CE3 also fail the VW-1 Burn Test, but fail because the Sb:Br molar ratio is greater than 0.98. Although CE5 has an Sb:Br molar ratio within of 0.35 to 0.98, it failed the VW-1 test because of its non-homogeneous nature. CE5 had a visually heterogeneous mixture and it is speculated that the weight average molecular weight of 264,000 g/mol of the brominated flame retardant is too high to allow homogeneous mixing leading to failure in the VW-1 Burn Test. With respect to CE6, the relatively low Temperature of 5% Mass Loss (255°C) of the brominated flame-retardant lead to uncontrolled formation of hydrogen bromide during melt blending and cables for VW-1 Burn Testing could not be made. Unlike the comparative examples, IE1-IE4 (which are all made from polymeric compositions comprising a silane functionalized polyolefin, as well as a brominated flame retardant having a Temperature of 5% Mass Loss from 300°C to 700°C and a weight average molecular weight of from 1,000 g/mol to 30,000 g/mol, antimony trioxide, and with a Sb:Br molar ratio of 0.35 to 0.98) are all surprisingly able to pass the VW-1 Burn Test.

As evident from Table 2, all of the listed examples have similar compositions except CE7-CE9 have Sb:Br molar ratio's outside of the 0.35 to 0.98 range. CE7-CE9 fail the Horizontal Burn Test. Unlike the comparative examples, IE5-IE7 (which are all made form polymeric composition comprising a silane functionalized polyolefin, as well as a brominated flame retardant having a Temperature of 5% Mass Loss from 300°C to 700°C and a weight average molecular

weight of from 1,000 g/mol to 30,000 g/mol, antimony trioxide, and with a Sb:Br molar ratio of 0.35 to 0.98) are all surprisingly able to pass the Horizontal Burn Test.

## Claims

1. A polymeric composition comprising:

   a silane functionalized polyolefin, wherein the polymeric composition comprises 42 wt% or greater, while at the same time, 75 wt% or less, of the silane functionalized polyolefin based on a total weight of the polymeric composition;
   a brominated flame retardant having a Temperature of 5% Mass Loss from 300°C to 700°C as measured according to Thermogravimetric Analysis as described in the description, wherein the brominated flame retardant is polymeric and has a weight average molecular weight of from 2,000 g/mol to 30,000 g/mol as measured using Gel Permeation Chromatography, wherein the brominated flame retardant is aromatically brominated; and
   antimony trioxide,
   wherein the polymeric composition has an antimony (Sb) to bromine (Br) molar ratio (Sb:Br molar ratio) of 0.35 to 0.98.

2. The polymeric composition of claim 1, further comprising:
   0.001 wt% to 20.0 wt% of a silanol condensation catalyst based on a total weight of the polymeric composition.

3. The polymeric composition of claim 1, wherein the polymeric composition comprises from 5 wt% to 50 wt% antimony trioxide based on the total weight of the polymeric composition.

4. The polymeric composition of claim 1, further comprising:
   0 wt% to 10 wt% zinc oxide, wherein the polymeric composition has a zinc (Zn) to Br molar ratio (Zn:Br molar ratio) from 0 to 1.85.

5. The polymeric composition of claim 1, further comprising:
   0.5 wt% to 20 wt% of a second polyolefin based on a total weight of the polymeric composition, wherein the second polyolefin has a crystallinity at 23°C of from 0 wt% to 80 wt% as measured according to Crystallinity Testing.

6. The polymeric composition of claim 1, wherein the polymeric composition comprises from 5 wt% to 50 wt% brominated flame retardant based on the total weight of the polymeric composition.

7. The polymeric composition of any one of claims 1-6, wherein the brominated flame retardant comprises aromatically brominated polystyrene having a Temperature of 5% Mass Loss from 300°C to 400°C as measured according to Thermogravimetric Analysis as described in the description and a molecular weight of 3,000 g/mol to 16,000 g/mol as measured using Gel Permeation Chromatography.

8. A coated conductor comprising:

   a conductor; and
   the polymeric composition of any one of claims 1-7 disposed at least partially around the conductor.

9. The coated conductor of claim 8, wherein the coated conductor passes one or more of a VW-1 Burn Test as described in the description and a Horizontal Burn Test as described in the description.

## Patentansprüche

1. Polymerzusammensetzung, umfassend:

   ein silanfunktionalisiertes Polyolefin, wobei die Polymerzusammensetzung zu 42 Gew.-% oder mehr, und gleichzeitig zu 75 Gew.-% oder weniger das silanfunktionalisierte Polyolefin, basierend auf einem Gesamtgewicht der Polymerzusammensetzung, umfasst,
   ein bromiertes Flammschutzmittel, das eine Temperatur von 5 % Massenverlust von 300 °C bis 700 °C aufweist,

gemessen gemäß der thermogravimetrischen Analyse wie in der Beschreibung beschrieben, wobei das bromierte Flammschutzmittel polymer ist und ein gewichtsdurchschnittliches Molekulargewicht von 2.000 g/mol bis 30.000 g/mol aufweist, gemessen unter Verwendung einer Gelpermeationschromatographie, wobei das bromierte Flammschutzmittel aromatisch bromiert ist; und
Antimontrioxid,
wobei die Polymerzusammensetzung ein Molverhältnis von Antimon (Sb) zu Brom (Br) (Sb:Br-Molverhältnis) von 0,35 bis 0,98 aufweist.

2. Polymerzusammensetzung nach Anspruch 1, ferner umfassend:
zu 0,001 Gew.-% bis 20,0 Gew.-% einen Silanolkondensationskatalysator, basierend auf einem Gesamtgewicht der Polymerzusammensetzung.

3. Polymerzusammensetzung nach Anspruch 1, wobei die Polymerzusammensetzung von zu 5 Gew.-% bis 50 Gew.-% Antimontrioxid, basierend auf dem Gesamtgewicht der Polymerzusammensetzung, umfasst.

4. Polymerzusammensetzung nach Anspruch 1, ferner umfassend:
zu 0 Gew.-% bis 10 Gew.-% Zinkoxid, wobei die
Polymerzusammensetzung ein Molverhältnis von Zink (Zn) zu Br (Zn:Br-Molverhälnis) von 0 bis 1,85 aufweist.

5. Polymerzusammensetzung nach Anspruch 1, ferner umfassend:
zu 0,5 Gew.-% bis 20 Gew.-% ein zweites Polyolefin, basierend auf einem Gesamtgewicht der Polymerzusammensetzung, wobei das zweite Polyolefin eine Kristallinität bei 23 °C von 0 Gew.-% bis 80 Gew.-% aufweist, gemessen gemäß einem Kristallinitätstest.

6. Polymerzusammensetzung nach Anspruch 1, wobei die Polymerzusammensetzung von zu 5 Gew.-% bis 50 Gew.-% das bromierte Flammschutzmittel, basierend auf dem Gesamtgewicht der Polymerzusammensetzung, umfasst.

7. Polymerzusammensetzung nach einem der Ansprüche 1 bis 6, wobei das bromierte Flammschutzmittel aromatisch bromiertes Polystyrol umfasst, das eine Temperatur von 5 % Massenverlust von 300 °C bis 400 °C, gemessen gemäß der thermogravimetrischen Analyse, wie in der Beschreibung beschrieben, und ein Molekulargewicht von 3.000 g/mol bis 16.000 g/mol, gemessen unter Verwendung einer Gelpermeationschromatographie, aufweist.

8. Beschichteter Leiter, umfassend:

einen Leiter, und
die Polymerzusammensetzung nach einem der Ansprüche 1 bis 7, die mindestens teilweise um den Leiter herum angeordnet ist.

9. Beschichteter Leiter nach Anspruch 8, wobei der beschichtete Leiter einen oder mehrere eines VW-1-Brenntests, wie in der Beschreibung beschrieben, und eines Horizontal-Brenntests, wie in der Beschreibung beschrieben, besteht.

**Revendications**

1. Composition polymère comprenant :

une polyoléfine fonctionnalisée par silane, dans laquelle la composition polymère comprend 42 % en poids ou plus, et en même temps 75 % en poids ou moins, de la polyoléfine fonctionnalisée par silane ; sur la base d'un poids total de la composition polymère ;
un ignifugeant bromé ayant une température de perte de masse de 5 % allant de 300 °C à 700 °C, telle que mesurée selon une analyse thermogravimétrique telle que décrite dans la description, dans laquelle l'ignifugeant bromé est polymérique et a une masse moléculaire moyenne en poids allant de 2 000 g/mol à 30 000 g/mol, telle que mesurée à l'aide d'une chromatographie par perméation de gel, dans laquelle l'ignifugeant bromé est aromatiquement bromé ; et
du trioxyde d'antimoine,
dans laquelle la composition polymère a un rapport molaire de l'antimoine (Sb) au brome (Br) (rapport molaire Sb:Br) de 0,35 à 0,98.

**2.** Composition polymère selon la revendication 1, comprenant en outre :
0,001 % en poids à 20,0 % en poids d'un catalyseur de condensation silanol sur la base d'un poids total de la composition polymère.

**3.** Composition polymère selon la revendication 1, dans laquelle la composition polymère comprend de 5 % en poids à 50 % en poids de trioxyde d'antimoine sur la base du poids total de la composition polymère.

**4.** Composition polymère selon la revendication 1, comprenant en outre :
0 % en poids à 10 % en poids d'oxyde de zinc, dans laquelle la composition polymère a un rapport molaire du zinc (Zn) à Br (rapport molaire Zn:Br) allant de 0 à 1,85.

**5.** Composition polymère selon la revendication 1, comprenant en outre :
0,5 % en poids à 20 % en poids d'une seconde polyoléfine sur la base d'un poids total de la composition polymère, dans laquelle la seconde polyoléfine a une cristallinité à 23 °C allant de 0 % en poids à 80 % en poids, telle que mesurée selon un essai de cristallinité.

**6.** Composition polymère selon la revendication 1, dans laquelle la composition polymère comprend de 5 % en poids à 50 % en poids d'ignifugeant bromé sur la base du poids total de la composition polymère.

**7.** Composition polymère selon l'une quelconque des revendications 1 à 6, dans laquelle l'ignifugeant bromé comprend du polystyrène aromatiquement bromé ayant une température de perte de masse de 5 % allant de 300 °C à 400 °C, telle que mesurée selon une analyse thermogravimétrique telle que décrite dans la description, et une masse moléculaire de 3 000 g/mol à 16 000 g/mol, telle que mesurée à l'aide d'une chromatographie par perméation de gel.

**8.** Conducteur revêtu comprenant :

un conducteur ; et
la composition polymère selon l'une quelconque des revendications 1 à 7 disposée au moins partiellement autour du conducteur.

**9.** Conducteur revêtu selon la revendication 8, dans lequel le conducteur satisfait à un ou plusieurs parmi un essai de combustion VW-1 tel que décrit dans la description et un essai de combustion horizontale tel que décrit dans la description.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019032335 A1
- US 4574133 A
- US 20160251535 A1


### Non-patent literature cited in the description


- *CHEMICAL ABSTRACTS,* 88497-56-7
- *CHEMICAL ABSTRACTS,* 1309-64-4
- **WILLIAMS ; WARD.** *Journal of Polymer Science, Polymer Letters,* 1968, vol. 6 (621
- *CHEMICAL ABSTRACTS,* 32687-78-8
- *CHEMICAL ABSTRACTS,* 77-58-7